# EUROPEAN PATENT APPLICATION

(11) **EP 2 492 409 A1**
(43) Date of publication of application: **29.08.2012**
(21) Application number: 12386007.4
(22) Date of filing: 22.02.2012
(51) Int. Cl.: E04C 1/41

(54) **Thermal insulating wall construction element**

(30) Priority: 23.02.2011 GR 2011100107
(71) Applicant: Tsakiroglou, Frixos, 50200 Ptolemais, Kozani (GR)
(72) Inventor: Tsakiroglou, Frixos, 50200 Ptolemais, Kozani (GR)

(57) **Abstract**

Unified thermal insulating wall construction element, which consists of two different elements, attached together by adhesive mortar. The first element is a brick which can be constructed from light concrete or any other suitable material, that is appropriate for the construction of bricks until today. It can have any shape (rectangular, square, s-type, rectangular with protrusions etc), it can be solid or with any shape of perforation to any direction, so that the weight is reduced.

The second element can be extruded polystyrene with rough surface or any other insulating material, like expanded polystyrene or rock wool.

## Description

The invention refers to a unified thermal insulating wall construction element, which consists of two different elements, attached together. The first element is a brick which can be constructed from light concrete or any other suitable material, that is appropriate for the construction of bricks until today. It can have any shape (rectangular,square, s-type, rectangular with protrusions etc), it can be solid or with any shape of perforation to any direction, so that the weight is reduced.

The second element can be extruded polystyrene with rough surface or any other insulating material, like expanded polysterene or rock wool.

The dimensions of the construction element, length-width-height, can vary whereas the thickness of the individual elements depends on the desired coeficient of thermal transimitance.

In the thermal insulating wall construction element the thermal insulating material protudes peripherally of the brick for a length of 0,5 cm so that during construction the thermal insulation of one element is adjacent to the one of the next element, so that it leaves a gap between the bricks for the fitting of the joining mortar, so that the result is a unified smooth external surface of thermal insulating material.

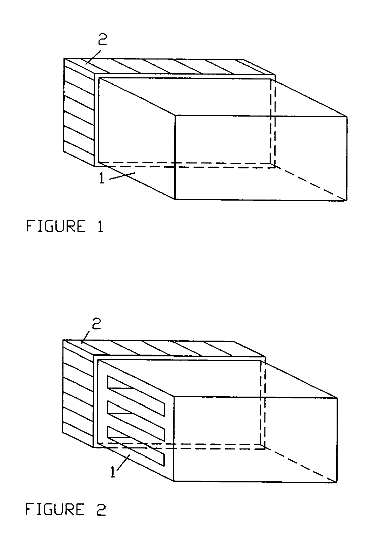

Figure 1 shows a construction element which consists of a solid brick (1) and a thermal insulating layer (2).
Figure 2 shows a construction element which consists of a perforated brick (1) and a thermal insulating layer (2).

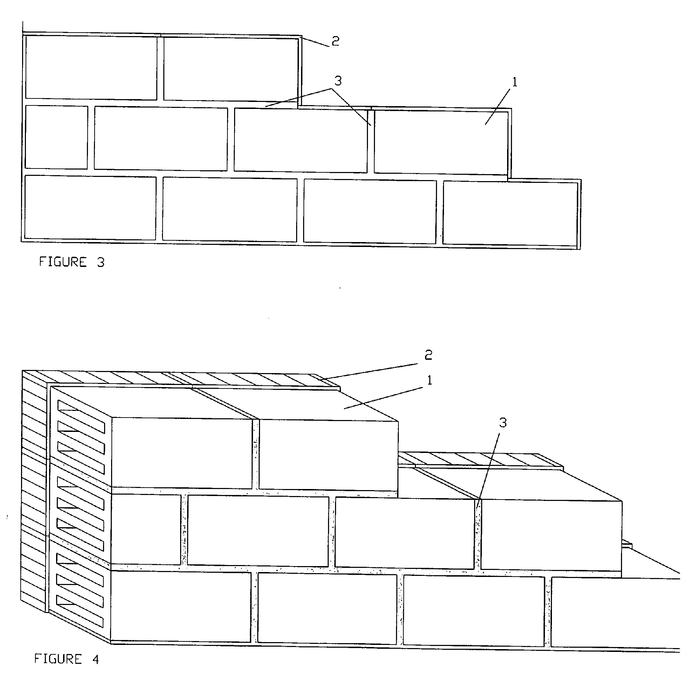

Figure 3 shows the front view of a wall where are visible the brick (1), the thermal insulating layer (2) and the joining mortar for the construction of the wall (3).
Figure 4 shows the isometric of a wall where are visible the perforated brick (1), the thermal insulating layer (2) and the joining mortar for the construction of the wall (3)

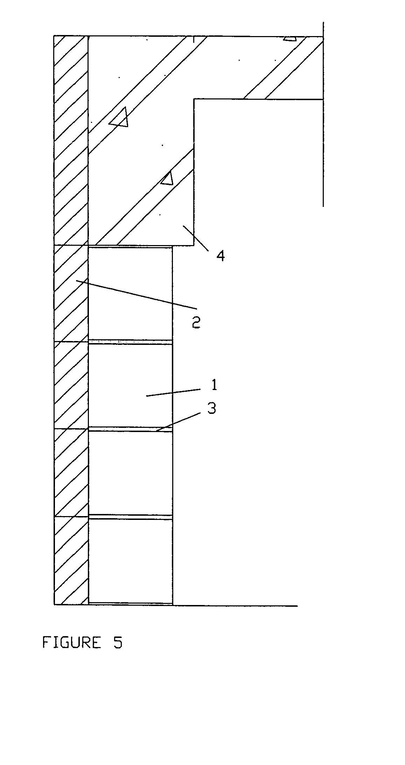

Figure 5 shows the cut view of a wall where are visible the brick (1), the thermal insulating layer (2), the joining mortar for the construction of the wall (3) and the insulated beam of the building (4) on the upper part of wall.

Up to now the ways to construct the outer walls of a building, including the thermal insulation, are the following:
1) Single-shell walls from porous elements (porous bricks, bricks from light concrete or pearlite concrete). The disadvantage of these walls is the large thickness that is required to achieve the desired thermal transmittance coefficient that is mandatory by the Greek regulations - specifications. Furthermore, another disadvantage is the forming of thermal bridges in the joining mortar between the bricks.
1) Double-shell walls with the thermal insulation placed in the core. This type of wall has the following disadvantages:
   a. There is usually poor continuity of the thermal insulation due to the poor construction practices by the builders, which results in the formation of thermal bridges.
   b. Only half of the heat capacity of the wall is exploited (half of its total thickness).
   c. There is formation of thermal bridges at the points where the wall and beams join.
   d. There is poor anti seismic behavior. Because of the insufficient connection of the outer and the inner wall, the walls are disconnected and it is very likely they collapse during a powerful earthquake.
2) Single-shell walls from perforated bricks or porous elements which are insulated after the wall is built, in outer side with insulating block-plates which are attached with glue and screw plugs. The disadvantages of this method is:
   a. The construction is performed in two phases, first the building and then the fitting of the insulating blocks. These two phases may be separated in time and they are usually performed by different construction teams, resulting in an increased cost.
   a. There is no proper contact between the insulating material and the wall. The stability of the insulation is a function of the quality of the gluing and the number of the screw plugs. If the screw plugs are not enough there is the possibility of the formation of gaps between the wall and the insulation blocks. All the above may result in the swelling of the wall, the detachment of the wall finishing and the detachment of the wall finishing and the insulation

The advantages of the invention are:
a. Given that the reinforced concrete elements of the building are insulated in their outer side with thermal insulating blocks fitted in the mould during construction, the creation of a continuous outer thermal insulating shell is achieved. This has great results in the building such as the avoidance of thermal bridges and the full exploitation of the heat capacity of the construction elements of the outer-shell.
b. The construction is performed by a single team, simultaneously building the wall and thermal insulating it, resulting in a reduced cost.

The thermal insulating wall construction element is a unified construction element and is characterized from the fact that it consists of two different elements attached to each other.

The first element is a brick which can be constructed from light concrete or any other suitable material, that is appropriate for the construction of bricks until today. It can have any shape (rectangular, square, s-type, rectangular with protrusions etc), it can be solid or with any shape of perforation to any direction, so that the weight is reduced.

The second element can be extruded polysterol with rough surface or any other insulating material, like expanded polystyrene or rock wool etc.

The thermal insulating material protrudes peripherally of the brick for a length of 0,5cm so that during construction the thermal insulation of one element is adjacent to the one of the next element, so that it leaves a gap between the bricks for the fitting of the joining mortar, so that the result is a unified smooth external surface of thermal insulating material.

The construction element can be produced in the same way that cement products are produced (Concrete blocks, Pumice blocks etc) after having laid the insulating layer.

Before applying the material of the brick on the insulating material, a thin layer of a strong adhesive mortar is put in the mould which functions as a joining element between the brick and the thermal insulating material. As long as the construction elements are wet the thermal insulating material is cut in the appropriate dimensions using wire cutting and the elements are put afterwards in a drying space.

The material of the brick (i.e. pumice) is strongly attached to the thermal insulating material during the drying through the layer of the adhesive mortar, as mentioned before.

## Claims

1. The thermal insulating wall construction element is a unified thermal insulating wall construction element and characterized that consists of two different elements, attached together by adhesive mortar. The first' element is a brick which can be constructed from light concrete or any other suitable material, that is appropriate for the construction of bricks until today. It can have any shape (rectangular, square, s-type, rectangular with protrusionsetc), it can be solid or with any shape of perforation to any direction, so that the weight is reduced.
The second element can be extruded polystyrene with rough surface or any other insulating material, like expanded polystyrene or rock wool.
The dimensions of the construction element length-width-height can vary whereas the thickness of the individual elements depends on the desired coefficient of thermal transmittance.

2. In the thermal insulating wall construction element, the thermal insulating material protudes perimetricaly of the brick for a length of 0,5 cm so that during construction the thermal insulation of one element is adjacent to the one of the next element, so that it leaves a gap between the bricks for the fitting of the joining mortar, so that the result is a unified smooth external surface of thermal insulating material.
